(19) Europäisches Patentamt
European Patent Office
Office européen des brevets

(11) Veröffentlichungsnummer: **0 114 386**
**B1**

(12) **EUROPÄISCHE PATENTSCHRIFT**

(45) Veröffentlichungstag der Patentschrift: **05.08.87**

(51) Int. Cl.⁴: **C 09 B 67/42**, C 08 J 3/22, C 08 L 67/02

(21) Anmeldenummer: **83113014.1**

(22) Anmeldetag: **23.12.83**

(54) **Farbmittelpräparation.**

(30) Priorität: **29.12.82 DE 3248492**

(43) Veröffentlichungstag der Anmeldung: **01.08.84 Patentblatt 84/31**

(45) Bekanntmachung des Hinweises auf die Patenterteilung: **05.08.87 Patentblatt 87/32**

(84) Benannte Vertragsstaaten: **AT CH DE FR GB IT LI NL**

(56) Entgegenhaltungen:
**DE - A - 1 183 195**
**GB - A - 1 391 926**

**CHEMICAL ABSTRACTS, Vol. 89, No. 16, October 16, 1978, Seite 44, COLUMBUS, OHIO, (US)**

(73) Patentinhaber: **HOECHST AKTIENGESELLSCHAFT, Postfach 80 03 20, D-6230 Frankfurt am Main 80 (DE)**

(72) Erfinder: **Klein, Peter, Dr., Fasanenweg 13, D-6200 Wiesbaden (DE)**
Erfinder: **Dewald, Bernd, Schwalbacher Strasse 42, D-6270 Idstein/Taunus (DE)**
Erfinder: **Teige, Wolfgang, Unter den Nussbäumen 25, D-6233 Kelkheim (Taunus) (DE)**

**EP 0 114 386 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Farbmittelpräparation aus Farbmittel und Farbmittelträger zum Färben in der Masse von bei über 200 3°C schmelzenden Polyestern der Grundeinheit

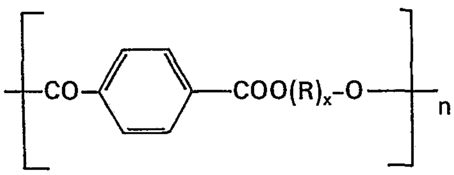,

wobei R gleich $-(CH_2)_x$ mit x = 2-6 oder

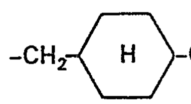 sein kann.

Zum Färben von Polyestern in der Masse gibt es eine ganze Reihe von Verfahren. Die Zugabe des Farbmittels bereits bei der Polykondensation des Polyesters setzt, wegen der hohen Polykondensationstemperaturen, hochhitzebeständige Farbmittel voraus. Eine weitere Voraussetzung hierbei sind grosse Produktionschargen, da die Umstellung von einer Farbe zur anderen durch die erforderliche Reinigung der Polykondensationsanlage kostspielig und zeitraubend ist. Soweit Pigmente zum Einsatz kommen, müssen sie in Ethylenglykol dispergiert werden.

Es besteht auch die Möglichkeit, das Farbmittel oder die Farbmittel-Präparation in geschmolzenem Zustand in den Schmelzfluss des zu färbenden Polymeren zu injizieren. Hierzu ist eine verhältnismässig aufwendige Einrichtung erforderlich.

Einfacher und wirtschaftlicher ist es, wenn man insbesondere beim Färben kleinerer Mengen eine Farbmittel-Präparation in Granulatform den Schnitzeln des zu färbenden Polyesters beimischt, z.B. in einem Taumeltrockner oder kontinuierlich bei der Einspeisung der zu färbenden Polyesterschnitzel in den Extruder.

Die heute bekannten Farbmittel-Präparationen enthalten oft einen zu geringen Anteil an Farbmitteln und haben den Nachteil, dass sie in Granulat- oder Pulverform beim Erwärmen zum Verkleben neigen. Ist der Anteil des Trägers in der Farbmittel-Präparation zu gross, verschlechtern sich die Eigenschaften der Endprodukte, z.B. können die textiltechnologischen Eigenschaften von Fasern und Filamenten beeinträchtigt werden. Ebenso kann das Aufpudern des Farbstoffes auf zu färbende Polyesterschnitzel im Taumeltrockner leicht zu Verklebungen führen, wenn die Neigung zum Verkleben zu gross ist.

Das Färben von Polyestern in der Masse mit Hilfe von Pigmentzubereitungen auf der Grundlage von Copolyestern ist bekannt.

So beschreibt die Europäische Patentanmeldung 8373 A1 das Herstellen einer Pigmentpräparation für die Färbung linearer Polyester in der Masse, nach welchem man aus 20 bis 80 Teilen Pigment und 80 bis 20 Teilen eines Polyesters, der zwischen 60 und 160°C schmilzt, durch Lösungsmittel-Salzknetung ein Vorkonzentrat herstellt, welches mit einem spinnbaren linearen Polyester verschmolzen und zu Granulat verarbeitet wird. Das Granulat enthält zweckmässig 3 bis 30 Gew.-% Pigment. Polyester sind solche aus aromatischen und/oder aliphatischen Dicarbonsäuren mit alipathischen Diolen. Dicarbonsäuren sind z.B. Terephthal-, Isophthal-, Azelain-, Sebacin- oder Adipinsäure; als Glykole kommen in Betracht: Ethylenglykol, 1.4-Butandiol, 1.4-Di(hydroxymethyl)-cyclohexan oder Neopentylglykol. Besonders geeignet sind Polyester aus Terephthal- und Azelainsäure sowie Butandiol und Diethylenglykol für die Herstellung des Granulates. Diese Copolyester werden in einem komplizierten Salzknetprozess mit dem gewünschten Pigment, mit Natriumchlorid und Diacetonalkohol verknetet, dann in Wasser nachbehandelt und gemahlen, gefiltert, gewaschen, getrocknet und sodann mit Polyethylenterephthalat gemischt und über mehrere Verarbeitungsstufen zum Granulat verarbeitet. In allen Ausführungsformen ist Polyethylenterephthalat überwiegender Bestandteil des Granulats. 1.4-Butandiol wird zwar in Beispielen 6 und 9 auch eingesetzt, jedoch nur als Bestandteil des Vorkonzentrats und gemeinsam mit Diethylenglykol als zweiter Diolkomponente; die Butandiol enthaltenden Copolyester sind hier amorph. Ausserdem wird dem Vorkonzentrat dann stets eine grössere Menge Polyethylenterephthalat zugesetzt als Copolyester darin enthalten ist.

Diese bekannte Pigmentpräparation enthält, wie die Beispiele zeigen, nur bis zu 30 Gew.-% Farbmittel, ist nicht ausreichend sicher gegen Verklebungen und kann die Lichtechtheit des gefärbten Polyesters negativ beeinflussen.

Aufgabe der Erfindung ist es, die genannten Nachteile zu beheben und eine Farbmittelpräparation zur Verfügung zu stellen, die es gestattet, Polyester lichtecht in der Masse zu färben, und die einfach herzustellen ist, die hohe Farbmittelmengen enthält und deren Granulat bei Trocknung und Verarbeitung nicht zu den störenden Verklebungen führt.

Diese Aufgabe wurde dadurch gelöst, dass der Farbmittelträger aus einem linearen Polyester mit einem Erweichungspunkt von über 60°C und Polybutylenterephthalat mit einer spezifischen Viskosität von 0,5 bis 1,5, gemessen bei einer Polymerkonzentration von 1 g/100 ml in Dichloressigsäure bei 25°C, besteht und dass die Farbmittelpräparation zwischen 210°C und 150°C, vorzugsweise zwischen 200 und 160°C, eine Rekristallisationsexotherme von 8 bis 55 Joule/g, vorzugsweise von 15-40 Joule/g aufweist.

Insbesondere ist der lineare Polyester ein Copolyester aus Tere-/Isophthalsäure und Ethylenglykol.

Polyester mit einem Schmelzpunkt über 200°C sind beispielsweise solche der Terephthalsäure mit Diolen der Formeln $HO(CH_2)_x$-OH oder

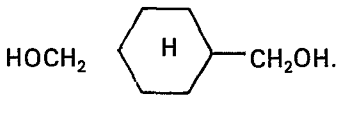

Unter «linearer Polyester mit Erweichungspunkt von über 60°C» sollen solche Polyester und Copolyester verstanden werden, die bislang schon in Farbmittelträgern bzw. Farbmittelpräparationen Verwendung gefunden haben. Erfindungsgemäss geeignete Polyester werden z.B. in der deutschen Offenlegungsschrift 1 965 379 genannt, erfindungsgemäss geeignete Copolyester in der deutschen Auslegeschrift 1 183 195. Ganz besonders gut geeignet ist ein Copolyester aus Tere- und Isophthalsäure mit Ethylenglykol, wobei in der Säurekomponente bevorzugt 20–35 Mol-% Isophthalsäure enthalten sind.

Diesen Polyestern oder Copolyestern, die das Farbmittel enthalten, wird nun soviel Polybutylenterephthalat zugesetzt, dass diese gesamte Farbmittelpräparation zwischen 210°C und 150°C, vorzugsweise zwischen 200 und 160°C, eine Rekristallisationsexotherme von 8 bis 55 Joule/g, vorzugsweise von 15 bis 40 Joule/g Farbmittelpräparation aufweist.

Die Abkühlung der zu untersuchenden geschmolzenen Probe erfolgt mit einer Geschwindigkeit von 20°C/min; gemessen wird im Differential-Abtast-Kalorimeter der Fa. Perkin Elmer (Differential Scanning Calorimeter DSC 2-C).

Geeignetes Polybutylenterephthalat hat eine spezifische Viskosität von 0,5 bis 1,5, ein geeigneter Copolyester eine spezifische Viskosität von ca. 0,4–1,0. Die Bestimmung der spezifischen Viskosität ($\eta_{spez.}$) erfolgt in Dichloressigsäure bei 25°C. Die Konzentration der Polymeren bei der Messung beträgt 1 g/100 ml Flüssigkeit.

Die Bestimmung der Erweichungstemperatur erfolgte in Anlehnung an das Verfahren A der DIN 53 460, jedoch mit einer Temperatursteigerung von 5°C pro Minute. Als Probekörper wurde Stranggranulat eingesetzt mit elliptischem Querschnitt, grosse Achse 3 mm, kleine Achse 2 mm, Schnittlänge 6 mm. Die Messungen erfolgten in Luft.

Die Farbmittelpräparation kann in bekannter Art und Weise hergestellt werden, z.B. durch Vermischen der kalten Bestandteile, Polybutylenterephthalat, linearer Polyester und Farbmittel, Aufschmelzen, Homogenisieren, Abkühlen und Granulieren.

Die Herstellung der Präparation ist daher sehr einfach und bietet ausserdem den ökologischen und wirtschaftlichen Vorteil, dass sich eine teure und umweltschädliche Salzknetung der Farbstoffzubereitung, wie sie bei der Herstellung von manchen Produkten noch notwendig ist, erübrigt.

Das als Farbmittelträger verwendete Polymergemisch gewährleistet eine rasche Aufnahme und homogene Verteilung des Farbmittels. Der Schmelz- bzw. Erweichungspunkt des Farbmittelträgers ist gleich oder niedriger als der Schmelzpunkt oder Erweichungspunkt des Farbmittels, so dass auch von dieser Seite eine leichte und einwandfreie Homogenisierung der Mischung möglich ist. Die Abkühlung kann erforderlichenfalls so geführt werden, dass eine möglichst gute Rekristallisation eintritt.

Die zur Herstellung der erfindungsgemässen Farbmittelpräparation verwendbaren Farbmittel sind vorzugsweise in Polyethylenterephthalat lösliche Farbstoffe. Es kommen aber auch in Polyester unlösliche Pigmente in Frage, sowie Mischungen verschiedener Farbstoffe und Mischungen aus Farbstoffen und Pigmenten.

Die Vorteile der erfindungsgemässen Farbmittelpräparation treten besonders ausgeprägt zutage, wenn lösliche Farbmittel verwendet werden. Beim Einsatz von im Polyester unlöslichen Pigmenten ist die erfindungsgemässe Farbmittelpräparation ebenfalls sehr nützlich, jedoch treten häufig die Verklebungen beim Trocknen oder beim Einziehen der Farbmittelpräparation in den Extruder weniger stark auf.

Das Granulat der erfindungsgemässen Farbmittelpräparation eignet sich besonders gut zum Mischen mit dem zu färbenden Granulat z.B. im Trockner oder beim Einspeisen in den Extruder bei hohen Temperaturen bis zu ca. 200°C.

Die Farbmittelpräparation bietet somit nicht nur bei ihrer Herstellung wirtschaftliche Vorteile, sondern auch dadurch, dass sie im Rahmen herkömmlicher Verfahren zum Färben von Polyestern in der Masse vorteilhaft eingesetzt werden kann, ohne dass zusätzliche Hilfsmittel wie z.B. eine Injektionsvorrichtung notwendig sind. Die Möglichkeit, die Farbmittelzubereitung am Extruder beizumischen; erlaubt es, auch kleine Produktionschargen wirtschaftlich einzufärben

Der Träger der Farbmittelpräparation besitzt in Polyethylenterephthalat und Polybutylenterephthalat eine hohe Löslichkeit. Die Präparationsschmelze verteilt sich in der zu färbenden Polyesterschmelze sehr rasch und homogen. Die Färbung beispielsweise von Polyesterfasern und Filamenten weist daher eine ausgezeichnete Egalität auf.

Durch die hohe Farbmittelkonzentration der Farbmittelpräparation bzw. die geringe Menge des in den zu färbenden Polyester einzubringenden Farbmittelträgers und dessen sehr gute Löslichkeit im einzufärbenden Substrat beeinträchtigt sie die Fasereigenschaften so gut wie nicht und verbürgt eine ausgezeichnete Verarbeitbarkeit der daraus hergestellten Fasern sowohl in der Spinnerei als auch in der Weberei.

Aus den Fasern lassen sich hochwertige Erzeugnisse mit guten Echtheiten und Gebrauchseigenschaften herstellen.

Ebenso können hervorragend gleichmässig gefärbte Kunststoffgegenstände hergestellt werden.

Anhand von Beispielen soll die Erfindung weiter erläutert werden.

Beispiel 1

300 g trockenes, gemahlenes Polyethylenterephthalat-coisophthalat ($\eta_{spez.}$ = 0,7), bei dem

Terephthalsäure und Isophthalsäure im Gewichtsverhältnis 75:25 enthalten sind, wurde mit 300 g trockenem und gemahlenem Polybutylenterephthalat ($\eta_{spez.}$ = 1,3) und 400 g eines blauen Anthrachinonfarbstoffes (C.I. Solvent Blue 122) vom Schmelzpunkt 230°C gemischt. Diese Mischung wurde in einem Doppelschneckenextruder oder Auspresskneter bei 230–240°C aufgeschmolzen und homogenisiert. Die homogenisierte Schmelze wurde als Strang ausgetragen, abgekühlt und granuliert.

Das erhaltene Granulat besass eine Kristallisationstemperatur $T_K$ = 117°C und eine Rekristallisationstemperatur $T_{RK}$ = 177°C. Die Rekristallisationsexotherme betrug 23 J/g.

Die hergestellten Chips zeigen bis zu 200°C Trockentemperatur keine Verklebungstendenzen.

Das Granulat wurde bei der Herstellung von Polyethylenterephthalat-Fasern zum Färben eingesetzt. Bei der Zumischung des Granulats in den 200°C heissen Einlaufbereich des Extruders treten keine Verklebungen auf. Die hergestellten Fasern zeigten einwandfreie Farbegalität und Lichtechtheit. Die mechanischen Eigenschaften der Fasern wurden nicht negativ beeinflusst; die Fasern liessen sich ohne Schwierigkeiten in Spinnerei und Weberei verarbeiten.

In Beispielen 2–8 und Vergleichsbeispielen 1 und 2 wurden die Eigenschaften verschiedener Farbmittelpräparationen in Abhängigkeit von der Zusammensetzung und von der jeweiligen Rekristallisationsexotherme untersucht. IT-Copolyester bedeutet darin eine Copolyester aus Ethylenglykol und Isophthalsäure und Terephthalsäure im Gewichtsverhältnis 1:3 der spezifischen Viskosität ($\eta_{spez.}$ = 0,7). Blau heisst, dass der Copolyester aus 60 Teilen IT-Copolyester und 40 Teilen Solvent Blue 122 besteht.

PBT bedeutet Polybutylenterephthalat einer spezifischen Viskosität ($\eta_{spez.}$ = 1,2).

IT-Copolyester Schwarz steht für dasselbe Copolymer aus Iso- und Terephthalsäure sowie Ethylenglykol wie nach Beispielen 2–4 und 8, jedoch mit 30 Gew.-% an Pigment Black 7, bezogen auf die Mischung Copolymer/Farbstoff.

Aus der Tabelle, in der Beispiele 2 bis 8 zusammengefasst sind, geht hervor, dass mit abnehmender Rekristallisationsexotherme der Farbmittelpräparation die Klebrigkeit zunimmt, weniger ausgeprägt, aber doch deutlich vorhanden, ist diese Erscheinung bei Anwesenheit eines Pigments (Russ) Beispiele 5, 6, 7 statt des löslichen Farbstoffes (Beispiele 1–4, 8).

Vergleichsbeispiele 1 und 2 zeigen, dass hinsichtlich der Verklebungen keine befriedigenden Ergebnisse erzielt wurden, wenn die Rekristallisationsexotherme mit 5,4 bzw. 5,8 Joule/g zu niedrig ist. Bereits bei 90°C bzw. 160°C traten Verklebungen auf. Rieselfähigkeit und Dosierbarkeit des Granulats waren stark beeinträchtigt. Eine exakte Dosierung der Farbmittelpräparationen war nicht mehr möglich.

Die Farbmittelpräparationen der Beispiele 1–8 führten dagegen beim Trocknen bzw. am Extrudereinlauf zu keinen nennenswerten Verklebungen.

Zur Prüfung der Klebrigkeit wurden 100 g Schnitzel bzw. Granulat im Trockenschrank 1 Stunde auf Prüftemperatur gebracht und bei dieser Temperatur mit einem Metallrührer umgerührt. Bei den mit «leicht klebrig» bezeichneten Schnitzeln ist ein Durchmischen mit dem Rührer erschwert bis nicht mehr möglich.

Tabelle

| Beispiel Nr. | Polymeres Gew.-Teil | Rekristallisations-temperatur °C | Rekristallisations-exotherme Joule/g | leicht klebrig °C | geschmolzen |
|---|---|---|---|---|---|
| 2 | 100 IT-Copolyester Blau<br>90 PBT | 177 | 26,0 | 210 | 230 |
| 3 | 100 IT-Copolyester Blau<br>60 PBT | 175 | 22,7 | 200 | 210 |
| 4 | 100 IT-Copolyester Blau<br>30 PBT | 169 | 15,5 | 180 | 210 |
| 5 | 100 IT-Copolyester Schwarz<br>105 PBT | 190 | 28,1 | 210 | 230 |
| 6 | 100 IT-Copolyester Schwarz<br>70 PBT | 188 | 20,5 | 210 | 230 |
| 7 | 100 IT-Copolyester Schwarz<br>35 PBT | 183 | 15,2 | 200 | 230 |

Tabelle

| Beispiel Nr. | Polymeres Gew.-Teil | Rekristallisations-temperatur °C | Rekristallisations-exotherme Joule/g | leicht klebrig °C | geschmolzen |
|---|---|---|---|---|---|
| 8 | 100 IT-Copolyester Blau 200 PBT | 178 | 46,0 | >210 | 230 |
| Vergl.-Beispiel 1 | 100 IT-Copolyester Blau 10 PBT | 155 | 5,4 | 90 | 210 |
| Vergl.-Beispiel 2 | 100 IT-Copolyester Schwarz 10 PBT | 164 | 5,8 | 160 | 200 |

Beispiel 9

In Anlehnung an das Beispiel 1 wurde eine Farbstoffkombination von

304 g Solvent Blue 122
20 g Solvent Green 28
56,4 g Pigment Black 7

zusammen mit

131,6 g Copolyester und
488 g Polybutylenterephthalat

eingesetzt. Die Bestandteile wurden intensiv gemischt und wie in Beispiel 1 zu Granulat verarbeitet. Die Rekristallisationsexotherme betrug 28,9 Joule/g. Die hergestellten Chips zeigten bis zu 210°C keine Verklebungstendenzen. 4 Teile dieser Farbmittelpräparation wurden in 96 Teilen Polyethylenterephthalat durch Schmelzspinnen ohne Störung zu tief marineblau gefärbten Spinnfasern verarbeitet, die eine ausgezeichnete Farbegalität und hervorragende Echtheitseigenschaften aufwiesen.

**Patentansprüche**

1. Farbmittelpräparation aus Farbmittel und Farbmittelträger zum Färben in der Masse von bei über 200°C schmelzenden Polyestern der Grundeinheit

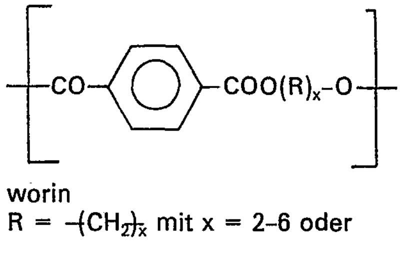

,

worin
R = $-(CH_2)_x$ mit x = 2–6 oder

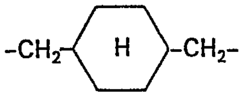 sein kann,

dadurch gekennzeichnet, dass der Farbmittelträger aus einem linearen Polyester mit einem Erweichungspunkt von über 60°C und Polybutylenterephthalat mit einer spezifischen Viskosität von 0,5 bis 1,5, gemessen bei einer Polymerkonzentration von 1 g/100 ml in Dichloressigsäure bei 25°C, besteht und dass die Farbmittelpräparation zwischen 210°C und 150°C, vorzugsweise zwischen 200 und 160°C, eine Rekristallisationsexotherme von 8 bis 55 Joule/g aufweist.

2. Farbmittelpräparation nach Anspruch 1, dadurch gekennzeichnet, dass der Farbmittelträger einen Copolyester aus Terephthalsäure/Isophthalsäure und Ethylenglykol enthält.

**Claims**

1. A colorant formulation of colorant and support for the colorant for mass-coloring polyesters melting above 200°C, of the basic unit

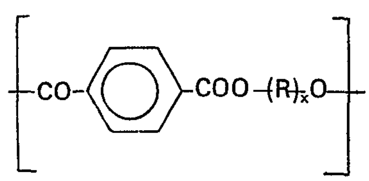

wherein
R = $-(CH_2)_x$ with x = 2–6 or 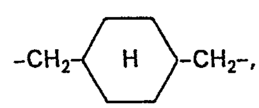

characterized in that the support for the colorant comprises a linear polyester having a softening point above 60°C and polybutylene terephthalate having a specific viscosity of from 0,5 to 1,5, determined at a polymer concentration of 1 g/100 ml in dichloro acetic acid at 25°C and in that said support for the colorant has a recrystallization exotherm of 8 to 55 joule/g, preferably 15-40 joule/g, between 210°C and 150°C, preferably between 200 and 160°C.

2. A colorant formulation as claimed in claim 1, wherein the support for the colorant contains a copolyester of terephtalic acid/isophthalic acid and ethylene glycol.

**Revendications**

1. Composition tinctoriale constituée d'un colorant et d'un support de colorants pour la teinture dans la masse de polyesters fondant au-dessus de 200°C et renfermant des motifs répondant à la formule suivante:

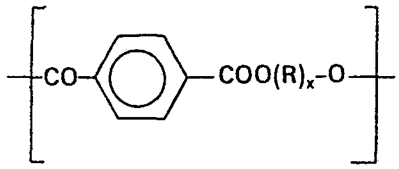

,

dans laquelle R peut représenter un radical $-(CH_2)_x$ dont l'indice x désigne un nombre de 2 à 6, ou représenter un radical

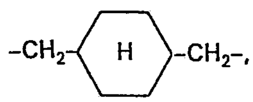

composition caractérisée en ce que le support de colorants est constitué d'un polyester linéaire ayant un point de ramollissement supérieur à 60°C et d'un poly-(téréphtalate de butylène) ayant une viscosité spécifique de 0,5 à 1,5, mesurée à une concentration du polymère de 1 g/100 ml dans de l'acide dichloracétique à 25°C, et en ce que la composition tinctoriale a une exothermicité de recristallisation comprise entre 8 et 55 J/g à une température comprise entre 210 et 150°C, de préférence entre 200 et 160°C.

2. Composition tinctoriale selon la revendication 1 caractérisée en ce que le support de colorants contient un copolyester dérivant, d'une part, de l'acide téréphtalique et de l'acide isophtalique et, d'autre part, de l'éthylène-glycol.